# EUROPEAN PATENT APPLICATION

(11) **EP 1 385 243 A2**
(43) Date of publication of application: **28.01.2004**
(21) Application number: 03015910.7
(22) Date of filing: 11.07.2003
(51) Int. Cl.: H02B 13/025

(54) **Disconnecting switch**

(30) Priority: 25.07.2002 JP 2002215970
(71) Applicant: Hitachi, Ltd., Chiyoda-ku, Tokyo 101-8010 (JP)
(72) Inventor: Utsumi, Tomoaki, Hitachi, Ltd., Intellectual Prop., Tokyo 100-8220 (JP); Endo, Fumihiro, Hitachi, Ltd., Intellectual Prop., Tokyo 100-8220 (JP); Rokunohe, Toshiaki, Hitachi, Ltd., Intellectual, Tokyo 100-8220 (JP); Nakano, Kouichi, Hitachi, Ltd., Intellectual Prop., Tokyo 100-8220 (JP); Omori, Takashi, Hitachi, Ltd., Intellectual Prop., Tokyo 100-8220 (JP); Yagihashi, Yoshitaka, Hitachi, Ltd., Intellectual, Tokyo 100-8220 (JP)
(74) Representative: Strehl Schübel-Hopf & Partner

(57) **Abstract**

(Subject)

Equipment size and product cost have been increased so far in an attempt to ensure dielectric strength in the face of increased electric field on the tips of a movable contactor and a fixed contactor of a disconnecting switch. The present invention permits equipment downsizing and production cost cutting while securing the dielectric strength of insulated switchgear.

(Means of Solving the Problems)

A field relaxation electrode is arranged on the movable contactor of a disconnecting switch, and the movable contactor can be connected with the fixed contactor by changing the position of the field relaxation electrode, depending on whether the circuit is open or closed.

(Effect)

When a field relaxation electrode is arranged in the movable contactor of switchgear as described above, the ground dielectric strength and inter-polar dielectric strength in the open circuit position can be improved to permit downsizing and cost cutting of equipment. Further, the scope of application of the equipment on a system can be expanded by improving the charging current breaking performance and exciting current breaking performance.

## Description

### BACKGROUND OF THE INVENTION

### (Field of the Invention)

The present invention relates to switchgear applicable to an extra-high voltage sub-station system for private use, sub-station electric of a power system, switching station or sub-station for power distribution.

### (PRIOR ART)

According to the prior art, as disclosed in the Japanese Application Patent Laid-Open Publication No. Hei 10-155215, a blade-shaped movable contactor rotates about the rotary axis of a movable conductor in the disconnecting switch. An open circuit is located 45 degree turned by a rotary lever from the closed circuit position connected to a fixed contactor, and a grounded position is found further 45 degrees turned from that position, where the switch is connected to a ground terminal. Thus, a disconnecting switch with grounding apparatus is formed by this arrangement.

### SUMMARY OF THE INVENTION:

### (Problems to be Solved by the Invention)

Riding a deregulation wave on a global scale, power utilities are facing a substantial cost slash and downsizing requirements.

In the aforementioned art, the electric field on the tip of the blade shaped movable contactor increases when the disconnecting switch is set to an open circuit position. This requires equipment dimensions to be increased in order to ensure a sufficient grounding dielectric strength and interpolar dielectric strength, raising a problem of high production costs.

For the open/close operation of the disconnecting switch, in the meantime, several amperes of the charging current and exciting current must be cut off during open/close operation after current has been broken by a circuit breaker. Further, a loop current amounting to hundreds to thousands of amperes and hundreds of volts in recovery voltage must be cut off depending on the arrangement of switchgear. In the aforementioned prior art, the electric fields of the tip of the movable contactor of the disconnecting switch and that of the fixed contactor are increased. This makes it necessary to increase the equipment dimensions and raise the operation speed of the disconnecting switch in order to ensure breaking performance, with the result that product costs have to be increased, as described above.

For a grounding apparatus, induction current amounting to hundreds of amperes and thousands of volts in recovery voltage must be cut off depending on the arrangement of switchgear. In the aforementioned prior art, the electric fields of the tip of the movable contactor and that of the fixed contactor are increased. This makes it necessary to increase the equipment dimensions and raise the operation speed of the grounding switch in order to ensure breaking performance, with the result that product costs have to be increased.

Further, due to the environmental issues on a global scale in recent years, there is going to be a restriction imposed on the use of SF₆ gas said to have a global warming coefficient about 24000 times that of carbon dioxide. Use of nitrogen or dried air with less environmental load, or SF₆ gas mixed with these gases is essential in some cases. Since the insulation performance and arc suppression performance of these gases are inferior to those of SF₆ gas, the dimensions of the equipment must be increased over those of the prior art equipment insulated with SF₆ gas, with the result that product costs have to be increased.

The object of the present invention is to reduce the dimensions and costs of the equipment, and to improve the charging current breaking performance and exciting current breaking performance while sufficient dielectric strength of the switchgear are ensured.

### (Means for Solving the Problems)

To solve the aforementioned problem, the switchgear according to the present invention is arranged in such a way that the movable contactor of a disconnecting switch is provided with a field relaxation electrode, thereby reducing the field relaxation electrode at the tip of the movable contactor in the open circuit state and improving interpolar dielectric strength.

The aforementioned is further characterized in that the movable contactor is connected with the fixed contactor or grounded electrode by changing the position of the field relaxation electrode, depending on whether the circuit is open or closed.

### BRIEF DESCRIPTION OF THE DWAWINGS

Fig. 1 is a structural diagram representing an embodiment of the disconnecting switch according to the present invention;
Fig. 2 is a cross sectional view showing the structure of Fig. 1 as viewed from the below;
Fig. 3 is a cross sectional view showing the structural diagram of Fig. 1 as viewed from the plane vertical to high voltage conductors;
Fig. 4 is a comparative example of the prevent invention;
Fig. 5 is a structural diagram representing an embodiment of the switchgear according to the present invention;
Fig. 6 is a cross sectional view showing the structural diagram of Fig. 5 as viewed from the plane vertical to high voltage conductors ; and
Fig. 7 is a structural diagram representing another embodiment of the disconnecting switch according to the present invention.

### DESCRIPTION OF THE PREFERRED EMBODIMENTS

The following describes the embodiments of the present invention with reference to drawings:

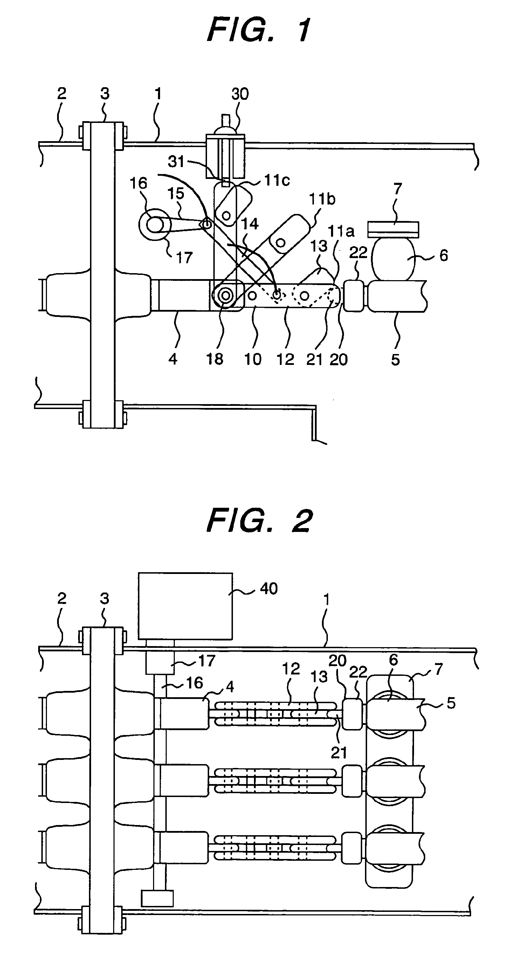

Fig. 1 is a drawing representing an embodiment of the disconnecting switch with a grounding apparatus of a switch according to the present invention. Fig. 2 is a cross sectional view diagram of Fig. 1 as viewed from the below. Fig. 1 and 2 show an example where disconnecting switches for three phases are collectively arranged in grounded metal containers 1 and 2. The grounded metal containers 1 and 2 are filled with nitrogen gas. An insulation spacer 3 is used to divide the space into separate units. The filled gas can be gas such as dried air and carbon dioxide; Freon gas (chlorofluorocarbon) such as SF₆ gas, C₃F₈ and c-C₄F₈; gas mixture between these gases and nitrogen gas; or gas mixture with dried air. In the grounded metal container 1 and 2, high voltage conductors 4 and 5 are insulated and supported by an insulation spacer 3, post spacer 6 and others. The post spacer 6 is secured to a pedestal 7 installed on the grounded metal container 1.

A disconnecting switch with grounding apparatus comprises a movable contactor 12 consisting of two conductors, a fixed contactor 20 and a grounding terminal 30. The movable contactor 12 is driven by an operation unit 40 via an insulation rod 14, a lever 15, a drive shaft 16 and a bushing 17. The movable contactor 12 rotates about the rotary shaft 18 of the high voltage conductor 4 on the movable side and stops at the closed circuit position 11a and open circuit position 11b between high voltage conductors 4 and 5, and at the grounded position 11c of the high voltage conductor 4 on the movable side.

The present invention is characterized in that the movable contactor 12 is provided with field relaxation electrode 13. At the open circuit position 11b, the field relaxation electrode 13 almost overlaps the tip of the movable contactor 12, where the electric field at the tip of the movable contactor 12 is relaxed.

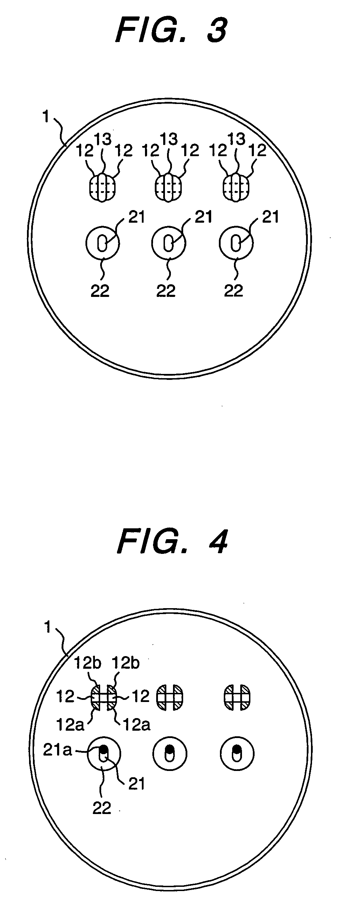

Fig. 3 is a cross sectional view of the high voltage conductors 4 and 5 of Fig. 1 as viewed in the vertical direction. The tip of the movable contactor 12 is located at the open circuit position 11b. Fig. 4 is a cross sectional view of the apparatus in the open circuit position where there is no field relaxation electrode 13, similarly to the case of Fig. 3. In Fig. 4, electric field is concentrated on the tip 12 of the movable contactor 12 on the side of the grounded container 1 when high voltage such as lightning impulse voltage is applied to the movable contactor 12. This requires a long insulation distance to be provided between the grounded container 1 and this tip in order to ensure dielectric strength. In Fig. 3, a field relaxation electrode 13 is arranged between two movable contactors 12, and concentration of electric field on the movable contactor tip 12b is substantially reduced. This permits a substantial reduction of the insulation distance for securing the dielectric strength, thereby enabling downsizing and cost cutting of the equipment.

When located at the closed circuit position 11a, the field relaxation electrode 13 is displaced by the fixed contactor 21, and is moved off the movable contactor 12. Since the insulation distance from the grounded container is greater than that in the closed circuit state, sufficient dielectric strength can be ensured. Further, when located at the grounded position 11c, the field relaxation electrode 13 is placed off the movable contactor 12 by the grounded electrode 31, but there is no insulation problem since grounding is ensured.

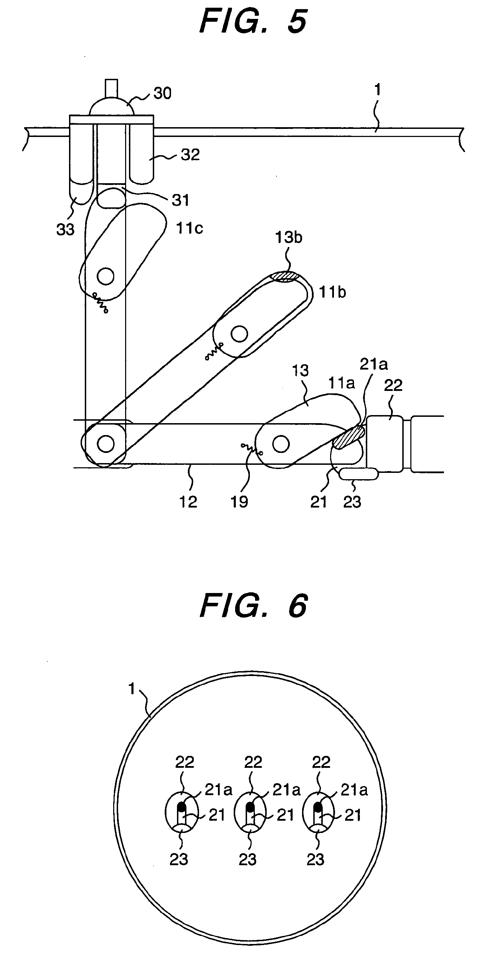

The following describes another embodiment of the present invention with reference to Figs. 5 and 6:

In Fig. 3, concentration of the electric field on the movable contactor tip 12a is substantially reduced by the field relaxation electrode 13. In order to bring the open circuit position 11b closer to the fixed contactor 21 for downsizing, it has been necessary to reduce the concentration of the electric field on the tip 21a of the fixed contactor 21 on the movable contactor side and to ensure dielectric strength. By contrast, Fig. 5 shows an example of reducing the concentration of the electric field on the tip 21a of the fixed contactor 21 on the movable contactor side. Fig. 6 is a cross sectional view vertical to the high voltage conductor of Fig. 5.

In Figs. 5 and 6, the curvature radius of the tip 21a is made greater than that on the opposite side in order to reduce the concentration of the electric field on the tip 21a of the fixed contactor. The fixed contactor 21 is arranged eccentric toward the side opposite to the movable contactor, and a field relaxation electrode 23 serving as an umbrella for the concentration of electric field of the tip 21a is arranged opposite to the movable contactor of the fixed contactor 21. The cross section of the high voltage conductor portion 22 adjacent to the fixed contactor 21 is formed in an elliptical form so that cross section of the high voltage conductor portion 22 is increased without reducing the phase-to-phase insulation distance. The aforementioned configuration reduces the electric field of the tip 21a of the fixed contactor, thereby enabling downsizing and cost cutting of the equipment. It is also possible to use a combination of the above arrangements, depending on a particular requirement.

If the interpolar dielectric strength is increased as described above, dielectric strength is improved during the opening operation, namely in the middle of the movable contactor 12 shifting from the closed circuit position 11a to the open circuit position 11b, with the result that the charging current breaking performance and exciting current breaking performance are also improved.

In the example of Fig. 5, in order to improve the ground dielectric strength further at the open circuit position 11b, the curvature radii of the tips 13b of the movable contactor 12 and field relaxation electrode 13 are increased to reduce the concentration of electric field. To improve ground dielectric strength further, a field relaxation electrode 33 for grounded electrode is provided to reduce the field concentration on the grounded electrode tip.

The field relaxation electrode 13 and movable contactor 12 are connected by a spring 19 so that the position of the field relaxation electrode 13 in the open circuit position 11b is kept at a position overlapping the tip of the movable contactor 12, thereby reducing field concentration. It is displaced by the fixed contactor 21 at the closed circuit position 11a, and by the grounded electrode 31 at the grounded position 11c.

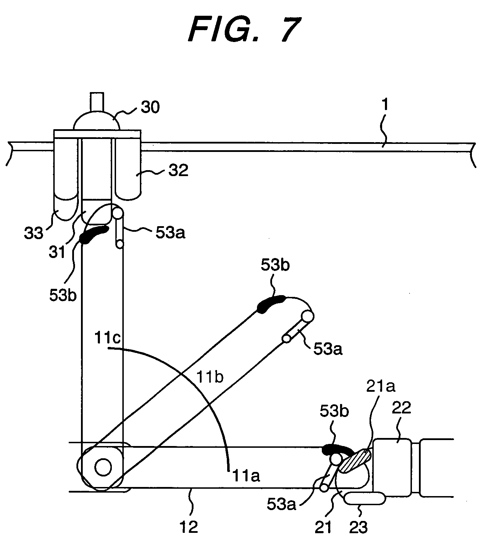

The following describes a further embodiment of the present invention with reference to Fig. 7.

Fig. 7 shows a further embodiment of the disconnecting switch with grounding apparatus according to the present invention. The two field relaxation electrodes 53a and 53b mounted on the movable contactor 12 is so arranged as to overlap the tip portions of the movable contactor on the fixed contactor side and on the ground side when the movable contactor is in the open circuit position 11b. This arrangement reduces the concentration of electric field. In the closed circuit position 11a, the field relaxation electrode 13a is displaced by the fixed contactor 21; whereas, in the grounded position 11c, the field relaxation electrode 13b is displaced by the grounded electrode 31.

In the aforementioned embodiments, the three positions of the ground condition have been shown in terms of a closed circuit state and an open circuit state. In the similar structure, it is also possible to configure a two-position disconnecting switch involving only a closed circuit state and an open circuit state without any grounded electrode being mounted. Further, the aforementioned embodiments have been described as three phases being integrated in one structure. It is also possible to incorporate the components in each grounded container for each phase.

The switchgear having the aforementioned arrangement can be incorporated in a power receiving unit, bus unit and circuit breaker unit and transformer side unit. They can also be connected to the circuit breaker unit, current transformer unit , and voltage transformer unit.

In the switch according to the present invention, an insulation gas stored in the container can be nitrogen gas, carbon dioxide gas, SF₆ gas, C₃F₆ gas, c-C₃F₈ gas, a gas mixture between dry air and SF₆ gas, a gas mixture between nitrogen gas and SF₆, a gas mixture between nitrogen gas and C₃F₆ gas, or a gas mixture between nitrogen gas and c-C₃F₈ gas. Further, the circuit breaker installed on the circuit breaker unit can be used as a vacuum circuit breaker up to 70 kV where it can be employed under vacuum.

### (EFFECTS OF THE INVENTION)

In the present invention, when a field relaxation electrode is arranged in the movable contactor of switchgear as described above, the ground dielectric strength and inter-polar dielectric strength in the open circuit position can be improved to permit downsizing and cost cutting of equipment. Further, the scope of application of the equipment on a system can be expanded by improving the charging current breaking performance and exciting current breaking performance.

## Claims

1. Switchgear wherein high voltage conductors supported with insulators and a disconnecting switch for opening and closing said high voltage conductors are arranged in a grounded container; said disconnecting switch comprising a movable contactor and a fixed contactor, and switching between closed and open circuit states is provided by said movable contactor driven by an operation apparatus;
said switchgear **characterized in that** said movable contactor is equipped with a field relaxation electrode, and the position of said field relaxation electrode with respect to said movable contactor is different depending on whether the circuit is opened or closed.

2. Switchgear wherein high voltage conductors supported with insulators and a disconnecting switch for opening and closing said high voltage conductors are arranged in a grounded container; said disconnecting switch comprising movable contactor and a fixed contactor, and switching between closed and open circuit states is provided by said movable contactor driven by an operation apparatus;
said switchgear **characterized in that** said movable contactor is equipped with a field relaxation electrode,
said field relaxation electrode is located where it overlaps the tip of said movable contactor when the circuit is open,
tip of the movable contactor contacts that of the fixed contactor when the circuit is closed, and
part of the field relaxation electrode is located off the movable contact.

3. Switchgear wherein high voltage conductors supported with insulators and a disconnecting switch for opening and closing said high voltage conductors are arranged in a grounded container; said disconnecting switch comprising movable contactor and a fixed contactor, and switching between closed and open circuit states is provided by said movable contactor driven by an operation apparatus;
said switchgear **characterized in that** said movable contactor is equipped with a field relaxation electrode, and, when the circuit is open, said field relaxation electrode is located where the outer periphery of the tip of said movable contactor almost overlaps that of said field relaxation electrode.

4. Switchgear according to any one of Claims 1 through 3 **characterized in that** a grounded electrode is arranged and said movable contactor is driven to the side opposite to that in closed state, whereby the movable contactor is placed in the grounded state of being in contact with said grounded electrode, and the field relaxation electrode is displaced by the grounded electrode in the grounded state.

5. Switchgear according to any one of Claims 1 through 4 **characterized in that** the field relaxation electrode in the state of open circuit is displaced by a spring.

6. Switchgear according to any one of Claims 1 through 5 **characterized in that** the curvature radius the tip of the movable contactor on the side of the grounded container in the open state is made greater than that on the side of the fixed contactor.

7. Switchgear according to any one of Claims 1 through 6 **characterized in that** the contact section of the fixed contactor is arranged eccentrically on the side opposite to the movable contactor in the open circuit state.

8. Switchgear according to any one of Claims 1 through 7 **characterized in that** a portion wider than said contact section is arranged on the contact section of the fixed contactor on the side opposite to the disconnected direction of the movable contactor.

9. Switchgear according to any one of Claims 1 through 8 **characterized in that** the high voltage conductor adjacent to the contact section of said fixed contactor is formed to have an elliptical cross section.

10. Switchgear according to any one of Claims 1 through 9 **characterized in that** said field relaxation electrode is made of arc proof alloy in whole or in part.

11. Switchgear according to any one of Claims 1 through 10 **characterized in that** the insulating gas is made of dried air, nitrogen gas, carbon dioxide gas, SF₆ gas, a gas mixture between C₃F₆ gas, c-C₃F₈ gas or dry air and SF₆ gas; a gas mixture between nitrogen gas and SF₆; a gas mixture between nitrogen gas and C₃F₆ gas; or a gas mixture between nitrogen gas and c-C₃F₈ gas.

12. Switchgear according to any one of Claims 1 through 11 **characterized in that** said switchgear is composed of any two of a power receiving unit, a bus unit, a circuit breaker unit, a transformer side unit and instrumentation current transformer unit.

13. Switchgear according to Claim 12 **characterized in that** a vacuum circuit breaker is used as a circuit breaker of said circuit breaker unit.

14. Switchgear according to Claim 4 **characterized in that** a grounded electrode field relaxation electrode is installed adjacent to said grounded electrode.

15. Switchgear wherein high voltage conductors supported with insulators and a disconnecting switch for opening and closing said high voltage conductors are arranged in a grounded container; said disconnecting switch comprising a movable contactor and a fixed contactor, and switching between closed and open circuit states is provided by said movable contactor driven by an operation apparatus;
said switchgear **characterized in that** the shape of said movable contactor is different depending on whether the movable circuit is opened or closed.

16. Switchgear according to Claim 15 **characterized in that** said movable contactor is equipped with a field relaxation electrode, and the position of said field relaxation electrode with respect to said movable contactor is different depending on whether the circuit is opened or closed.
